# EUROPEAN PATENT APPLICATION

(11) **EP 4 579 113 A1**
(43) Date of publication of application: **02.07.2025**
(21) Application number: 23856928.9
(22) Date of filing: 02.06.2023
(51) Int. Cl.: F16L 59/04

(54) **HEAT INSULATING WALL AND HEAT INSULATING CONTAINER**

(30) Priority: 22.08.2022 JP 2022131635
(71) Applicant: Panasonic Intellectual Property Management Co., Ltd., Kadoma-shi, Osaka 571-0057 (JP)
(72) Inventor: OKAWA, Masafumi, Kadoma-shi, Osaka 571-0057 (JP); KAWARAZAKI, Hideji, Kadoma-shi, Osaka 571-0057 (JP); NOZUE, Akihiro, Kadoma-shi, Osaka 571-0057 (JP); KOJIMA, Yasuro, Kadoma-shi, Osaka 571-0057 (JP)
(74) Representative: Eisenführ Speiser
(86) International application number: PCT/JP2023/020642
(87) International publication number: WO 2024/042810

(57) **Abstract**

A heat-insulating wall (20) includes: a core (30) made of urethane foam including a plurality of cells (40); and an outer cover (21) including an internal space accommodating the core (30), the internal space being reduced in pressure. The core (30) includes: a skin layer (36) including a surface (31) that is in contact with the outer cover (21); and an inner layer including the plurality of cells and located farther from the outer cover than the skin layer (36). The plurality of cells (40) included in the inner layer includes: a first cell (40) that is open on the surface (31) of the skin layer (36) through the skin layer (36); and a second cell (42) that is not open on the surface (31) of the skin layer (36).

## Description

### Technical Field

The present disclosure relates to a heat-insulating wall and a heat-insulating container.

### Background Art

A heat-insulating box body of PTL 1 has been known as a heat-insulating wall. PTL 1 describes that this heat-insulating box body is formed such that: a hollow portion of a casing thereof is filled with urethane foam; and an inside of the hollow portion is made vacuum by discharging air.

### Citation List

### Patent Literature

PTL 1: Japanese Laid-Open Patent Application Publication No. 9-119771

### Summary of Invention

### Technical Problem

As with the heat-insulating box body of PTL 1, when the hollow portion of the casing is filled with the urethane foam, an airtight skin layer is formed on a surface of the urethane foam which is in contact an inner surface of the casing. The urethane foam is covered with this skin layer. Therefore, even when air is discharged from the inside of the hollow portion, the inside of the urethane foam cannot be made vacuum. Thus, a heat insulating property of the heat-insulating box body cannot be improved. Moreover, since a lot of air bubbles are contained in the urethane foam of the heat-insulating box body, the heat-insulating box body is easily deformed due to the air bubbles.

The present disclosure was made to solve the above problems, and an object of the present disclosure is to provide a heat-insulating wall and a heat-insulating container each of which can obtain both of a heat insulating property and strength.

### Solution to Problem

A heat-insulating wall according to one aspect of the present disclosure includes: a core made of urethane foam including a plurality of cells; and an outer cover including an internal space accommodating the core, the internal space being reduced in pressure, wherein: the core includes a skin layer including a surface that is in contact with the outer cover and an inner layer including the plurality of cells and located farther from the outer cover than the skin layer; and the plurality of cells included in the inner layer includes a first cell that is open on the surface of the skin layer through the skin layer and a second cell that is not open on the surface of the skin layer.

According to this configuration, the cells of the core communicate with the outside of the core through the first cell that is open on the surface. Since air is discharged from the cells of the core through the first cell to the outside, the heat insulating property of the heat-insulating wall can be improved. Moreover, since the skin layer covering the second cell is stretched tight, the strength that suppresses the deformation of the heat-insulating wall can be secured.

### Advantageous Effects of Invention

The present disclosure can provide the heat-insulating wall and the heat-insulating container each of which can obtain both of the strength and the heat insulating property.

### Brief Description of Drawings

FIG. 1 is a perspective view showing one example of a heat-insulating container including a heat-insulating wall according to an embodiment of the present disclosure.
FIG. 2 is a diagram showing a core and outer cover of the heat-insulating wall of FIG. 1.
FIG. 3 is a perspective view showing the core of FIG. 2.
FIG. 4 is a sectional view showing the heat-insulating wall of FIG. 1.
FIG. 5A is a SEM image of the core which is obtained by taking an image of a skin layer with a scanning electron microscope (SEM) after a first layer is cut along a section orthogonal to a thickness direction. FIG. 5B is a SEM image of the core which is obtained by taking an image of the skin layer and the first layer with the scanning electron microscope after the skin layer and the first layer are cut along a section parallel to the thickness direction.

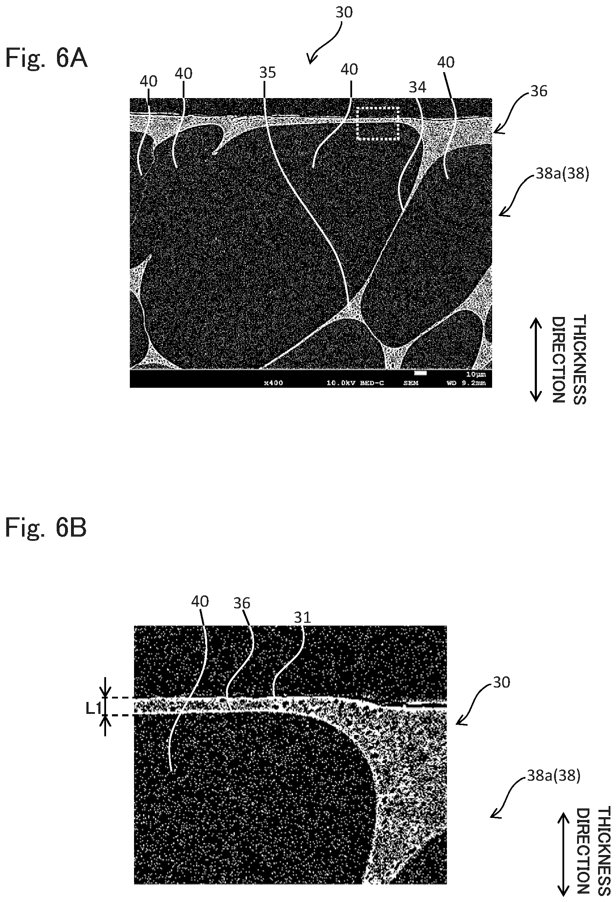

FIG. 6A is an enlarged image of a portion shown by a dotted line in the SEM image of FIG. 5B. FIG. 6B is an enlarged image of a portion shown by a dotted line in the SEM image of FIG. 6A.
FIGS. 7A and 7B are the SEM images of the core each of which is obtained by taking an image of a planar dividing wall including communication holes with the scanning electron microscope.
FIG. 8 is a SEM image of the core which is obtained by taking an image of the skin layer, the first layer, and a second layer with the scanning electron microscope after the skin layer, the first layer, and the second layer are cut along a section parallel to the thickness direction.
FIG. 9A is a perspective view schematically showing a flat cell having a flat ellipsoidal shape. FIG. 9B shows sectional views obtained by cutting a third cell of FIG. 9A along a minor axis, a first major axis, and a second major axis.
FIG. 10 is a diagram schematically showing a relation between the minor axis of the third cell of FIG. 9A and the thickness direction of the core.

### Description of Embodiments

Hereinafter, an embodiment of the present disclosure will be specifically described with reference to the drawings. In the following description and the drawings, the same reference signs are used for the same or corresponding components.

For example, a heat-insulating container 10 according to the present disclosure has a box shape including an upper surface 11 that is open, and includes an inner surface 15, an outer surface 16, and a container space 14 that is an internal space. The inner surface 15 surrounds the container space 14, and the outer surface 16 surrounds the inner surface 15. The upper surface 11 is connected to an outer peripheral edge of the inner surface 15 and an outer peripheral edge of the outer surface 16.

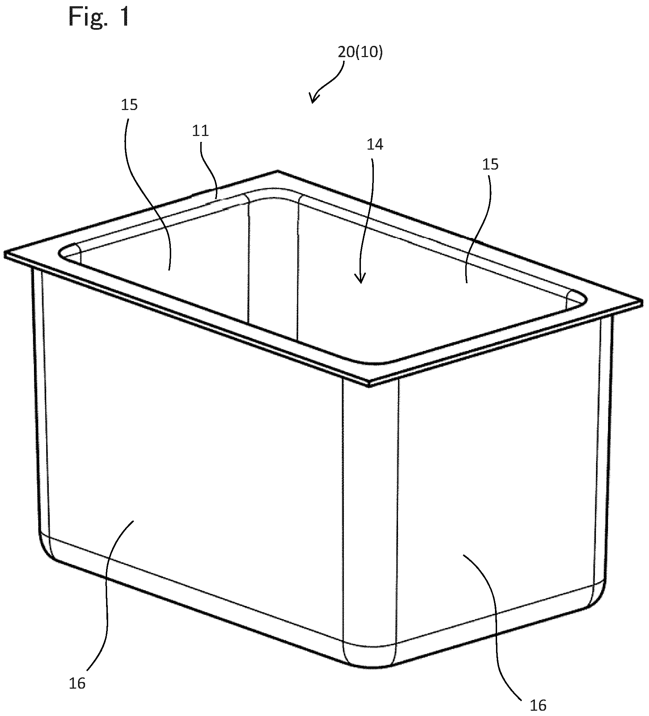

The heat-insulating container 10 includes a heat-insulating wall 20. In the example of FIG. 1, the heat-insulating wall 20 is the same in shape and size as the heat-insulating container 10, and the heat-insulating container 10 is formed by one heat-insulating wall 20. In this case, the heat-insulating wall 20 is the same in meaning as the heat-insulating container 10. The shape of the heat-insulating wall 20 and the number of heat-insulating walls 20 forming the heat-insulating container 10 are not limited to these. For example, the heat-insulating wall 20 may have a flat plate shape. In this case, the heat-insulating container 10 may be formed by a plurality of (for example, five) heat-insulating walls 20.

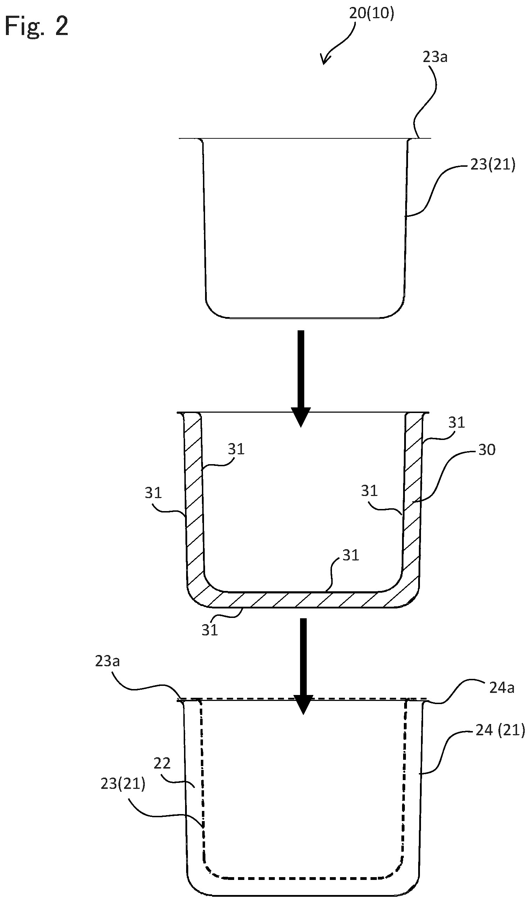

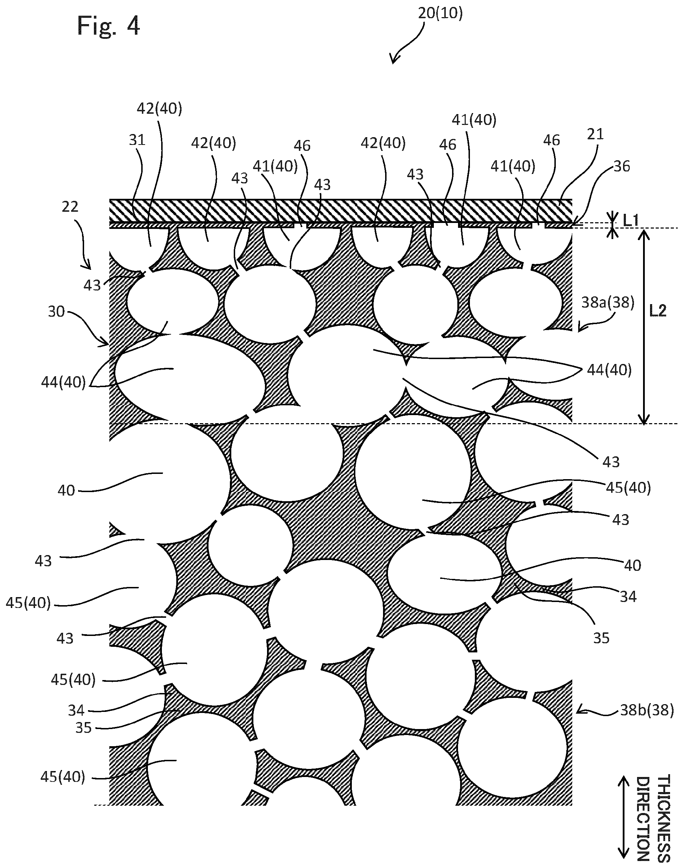

As shown in the example of FIG. 2, the heat-insulating wall 20 includes a core 30 and an outer cover 21. The core 30 is made of urethane foam including cells 40 (FIG. 4). The outer cover 21 includes a heat-insulating space 22 that is an internal space accommodating the core 30. The heat-insulating space 22 is reduced in pressure. The core 30 is a porous body including a large number of cells 40 (FIG. 4) and serves as a framework of the heat-insulating wall 20. The cells 40 are air bubbles (small spaces) generated by foaming in urethane. For example, the core 30 is made of urethane resin and is rigid urethane foam. Details of the core 30 will be described later.

The outer cover 21 has a gas barrier property, and the pressure of the heat-insulating space 22 is maintained lower than atmospheric pressure. For example, the outer cover 21 may be a laminated film including: a thermoplastic resin layer that can be subjected to thermal welding; an air barrier layer of an ethylene-vinyl alcohol copolymer, a polyvinyl alcohol polymer, or the like; and a steam barrier layer of polypropylene or the like. Moreover, the outer cover 21 may be a laminated film including, as a gas barrier layer, metal foil or a resin film on which metal is deposited.

The outer cover 21 accommodates the core 30 in the heat-insulating space 22, covers a surface 31 of the core 30, and is sealed. The heat-insulating space 22 of the outer cover 21 may accommodate a gas adsorber in addition to the core 30. The gas adsorber adsorbs gas, such as steam and air, remaining in or having entered the heat-insulating space 22 of the outer cover 21. Therefore, the pressure of the heat-insulating space 22 of the outer cover 21 can be maintained low.

### Method of Producing Heat-insulating Wall

As shown in the example of FIG. 2, the heat-insulating wall 20 includes the core 30 and the outer cover 21, and the outer cover 21 includes an inside member 23 and an outside member 24. The inside member 23 has a box shape including an upper surface that is open, and a flange portion 23a is located so as to surround this opening portion. The outside member 24 has a box shape including an upper surface that is open, and a flange portion 24a is located so as to surround this opening portion. Each of the inside member 23 and the outside member 24 is formed to have a predetermined shape by vacuum forming, pressure forming, blow molding, or the like.

Moreover, a mold for the core 30 is heated to a predetermined temperature, such as 50°C or higher, which is higher than a normal temperature (for example, 20°C±15°C), and a urethane liquid is poured into the heated mold. The urethane liquid includes: a compound including a hydroxyl group, such as polyol; polyisocyanate; and a chemical foaming agent, such as water. When a filling property and control of a reaction temperature are required, the urethane liquid may further include a physical foaming agent, such as hydrofluoroolefin.

In the mold, a polymerization reaction occurs between polyol and polyisocyanate in the urethane liquid. The foaming agent foams by being heated by heat generated by this polymerization reaction. Thus, a plurality of cells 40 are formed in the urethane. Then, the urethane foam formed as above is released from the mold. Thus, the core 30 having a box shape including an upper end that is open is molded. The surface 31 of the core 30 is a surface which has been in contact with the mold.

Then, the core 30 is accommodated in the outside member 24, and the inside member 23 is accommodated in the core 30. Thus, the core 30 is accommodated in the heat-insulating space 22 between the outside member 24 and the inside member 23, and the flange portion 23a of the inside member 23 overlaps the flange portion 24a of the outside member 24 from above. The flange portion 24a and the flange portion 23a are welded to each other, and the heat-insulating space 22 is subjected to vacuum drawing through an opening portion located at the inside member 23 or the outside member 24. Thus, the heat-insulating space 22 is reduced in pressure, and the inside member 23 and the outside member 24 are brought into tight contact with the surface 31 of the core 30. Then, by sealing the opening portion with a sealant, the outer cover 21 is sealed. Thus, the heat-insulating wall 20 including the heat-insulating space 22 whose pressure is lower than the atmospheric pressure is produced. In this case, the inside member 23 constitutes the inner surface 15 (FIG. 1) of the heat-insulating wall 20, and the outside member 24 constitutes the outer surface 16 (FIG. 1) of the heat-insulating wall 20.

### Core

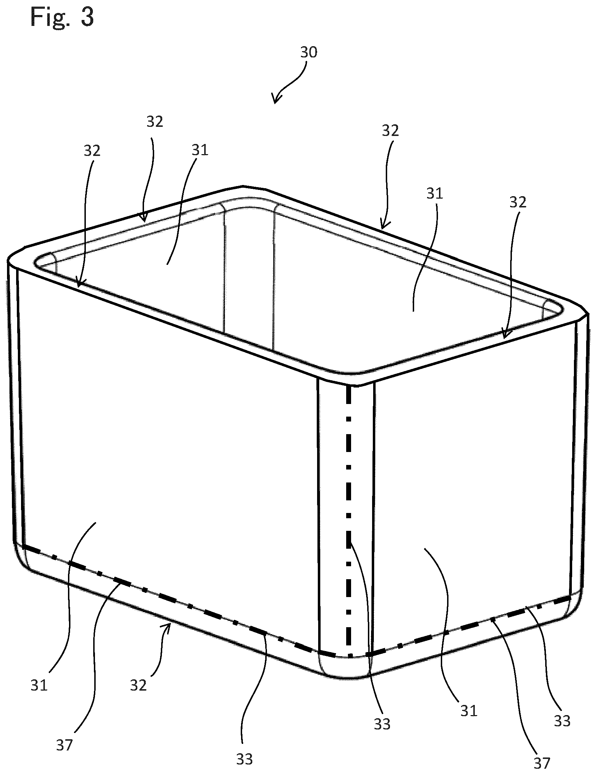

As shown in the example of FIG. 3, the core 30 of the heat-insulating wall 20 has a box shape including an upper surface that is open, and includes five flat surface portions 32 and a corner portion 33. Four of the five flat surface portions 32 constitute side surfaces having a tubular shape including upper and lower surfaces that are open, and the remaining one flat surface portion 32 covers the opening portion of the lower surface. In the core 30 having the box shape, the corner portion 33 is linearly located at a position where two flat surface portions 32 are connected to each other. For example, the corner portion 33 is located at a connection portion between the flat surface portion 32 forming the lower surface and the flat surface portion 32 forming the side surface. Moreover, the corner portion 33 is located at a connection portion between the flat surface portions 32 forming two side surfaces.

In the example of FIG. 4, the core 30 includes a skin layer 36 and an inner layer 38. An outer surface of the skin layer 36 is opposed to and contacts the outer cover 21 and forms the surface 31 of the core 30. The surface 31 is flat and spreads in an orthogonal direction orthogonal to a thickness direction.

In the thickness direction orthogonal to the surface 31, the inner layer 38 is located farther from the outer cover 21 than the skin layer 36. A plurality of cells 40 are dispersed in the inner layer 38 in the thickness direction and the orthogonal direction. The skin layer 36 is located between the cells 40 of the inner layer 38 and the outside of the core 30 and covers the cells 40.

In the inner layer 38, a planar dividing wall 34 made of resin is located between two adjacent cells 40. A columnar dividing wall 35 made of resin is located among three or more adjacent cells 40. The planar dividing wall 34 has a film shape. A dimension of the planar dividing wall 34 between the cells 40 is smaller than a dimension of the columnar dividing wall 35 between the cells 40 and is, for example, 2 µm or more and 20 µm or less. The cells 40 communicate with each other through a communication hole 43.

### Skin Layer

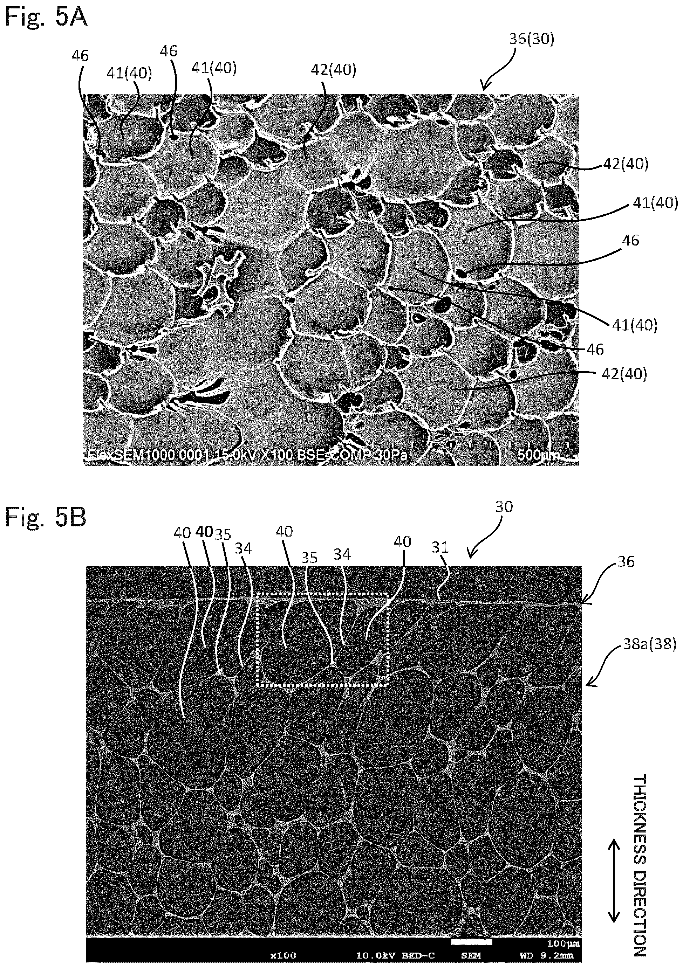

In the example shown in FIGS. 4 and 5A, the skin layer 36 spreads in the orthogonal direction to cover the plurality of cells 40 that are dispersed in the orthogonal direction. Moreover, as shown in the example of FIGS. 4 and 5B, the skin layer 36 covers the cells 40 which are located closest to the surface 31 among the plurality of cells 40 dispersed in the thickness direction. A thickness L1 of the skin layer 36 is 20 µm or less, and is, for example, 2 µm or more and 20 µm or less.

As shown in the example of FIGS. 4 and 5A, the cells 40 covered with the skin layer 36 include first cells 41 and second cells 42. Each second cell 42 does not include a through hole 46 that penetrates the skin layer 36. The second cell 42 is not open on the surface 31 of the core 30. Therefore, communication between the second cell 42 and the outside of the core 30 is blocked by the skin layer 36, and the second cell 42 is covered with the skin layer 36. Since the skin layer 36 is stretched tight, strength that suppresses the deformation of the heat-insulating wall 20 can be secured.

Each first cell 41 includes the through hole 46 that penetrates the skin layer 36. The first cell 41 is open on the surface 31 of the core 30 by the through hole 46 and communicates with the outside of the core 30 through the through hole 46.

The first cells 41 and the second cells 42 communicate with the other cells 40 through the communication holes 43. Moreover, the cells 40 other than the first cells 41 and the second cells 42 also communicate with the other cells 40 through the communication holes 43. Therefore, all or almost all of the cells 40 in the core 30 communicate with each other through the communication holes 43. Furthermore, the first cells 41 among the cells 40 communicate with the outside of the core 30 through the through holes 46. Therefore, all or almost all of the cells 40 in the core 30 form a continuous air bubble structure in which all or almost all of the cells 40 communicate with the outside of the core 30 through the communication holes 43 and the through holes 46. Thus, by discharging air from the inside of the core 30 to reduce the pressure of the inside of the core 30, a heat insulating property of the heat-insulating wall 20 can be improved. As above, both of the heat insulating property and strength of the heat-insulating wall 20 can be obtained by the first cells 41 and the second cells 42.

Moreover, in the heat-insulating wall 20, as shown in FIG. 3, the plurality of flat surface portions 32 are connected to each other and support each other at the corner portion 33 of the core 30. Therefore, the strength of the corner portion 33 is larger than the strength of the flat surface portion 32. Thus, a ratio of the number of first cells 41 to the sum of the number of first cells 41 and the number of second cells 42 in the corner portion 33 per unit volume may be set larger than a ratio of the number of first cells 41 to the sum of the number of first cells 41 and the number of second cells 42 in the flat surface portion 32 per unit volume. As above, since the corner portion 33 that secures the structural strength includes a large number of first cells 41, air discharging efficiency is improved, and the heat insulating property of the heat-insulating wall 20 can be improved. Therefore, both of the heat insulating property and strength of the heat-insulating wall 20 can be obtained.

On the other hand, in the heat-insulating wall 20, a ratio of the number of second cells 42 to the sum of the number of first cells 41 and the number of second cells 42 in the flat surface portion 32 per unit volume may be set larger than a ratio of the number of second cells 42 to the sum of the number of first cells 41 and the number of second cells 42 in the corner portion 33 per unit volume. Since the flat surface portion 32 includes a large number of second cells 42, the skin layer 36 is stretched tight, and the strength that suppresses the deformation of the heat-insulating wall 20 can be secured.

### Through Hole and Communication Hole

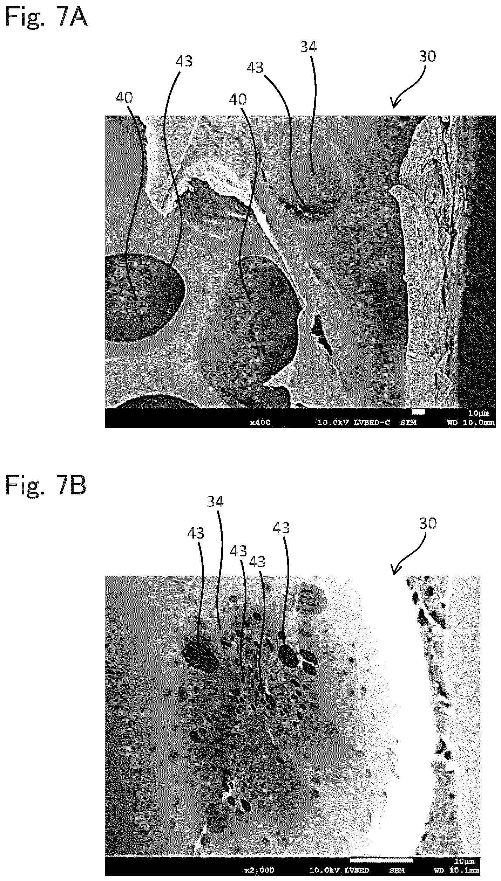

The through hole 46 and the communication hole 43 are formed by the following method, for example. According to a first method, as shown in the example of FIG. 7A, a hole is formed on the planar dividing wall 34 or the planar dividing wall 34 tears by stress of the cell 40. Thus, the communication hole 43 that penetrates the planar dividing wall 34 between the cells 40 is formed. Moreover, as with the communication hole 43, a hole is formed on the skin layer 36 or the skin layer 36 tears by the stress of the cell 40, and thus, the through hole 46 that penetrates the skin layer 36 between the cell 40 and the outside of the core 30 is formed.

According to a second method, as shown in the example of FIG. 7B, in the urethane liquid during the production of the core 30, a plurality of polyol mixtures that are different in composition from each other are used as the compound including the hydroxyl group. In this case, distortions are generated at the molecular level due to the differences among the compositions of the plurality of polyols. The planar dividing wall 34 breaks by the distortions, and the communication hole 43 penetrating the planar dividing wall 34 is formed. Moreover, as with the communication hole 43, the skin layer 36 breaks due to the distortions at the molecular level, and the through hole 46 penetrating the skin layer 36 is formed.

According to a third method, the through hole 46 is formed at the corner portion 33 of the core 30. To be specific, as shown in the example of FIG. 3, a parting line along which the mold is divided is located at the corner portion 33 of the core 30 made of the urethane foam released from the mold, and burrs 37 may be formed on the surface 31 of the core 30 along this parting line. In this case, when removing the burrs 37 with a file or the like, as shown in the example of FIG. 4, the skin layer 36 forming the surface 31 of the core 30 breaks, and the through hole 46 penetrating the skin layer 36 is formed.

As above, the through holes 46 and the communication holes 43 are formed at the core 30 by one or a plurality of methods. The cells 40 in the core 30 communicate with the outside of the core 30 through the through holes 46 and the communication holes 43. Therefore, air in the cells 40 is discharged to the outside of the core 30 through the through holes 46 and the communication holes 43. Thus, the inside of the core 30 is reduced in pressure, and heat conduction by the air is reduced. As a result, the heat insulating property of the heat-insulating wall 20 can be improved.

Moreover, for example, by heating the mold during the production of the core 30, the thickness of the planar dividing wall 34 of the skin layer 36 is reduced. Therefore, the through holes 46 are easily formed on the skin layer 36 by the stress of the cell 40, the distortions at the molecular level, and the removal of the burrs 37. Thus, particles for the formation of the through holes 46 do not have to be added to the urethane liquid. Therefore, a step of adding the particles and a facility that is highly durable against the particles are not required, and an increase in viscosity due to the particles does not occur. Thus, the heat insulating property of the heat-insulating wall 20 can be improved while suppressing a cost increase by the addition of the particles.

### First Layer

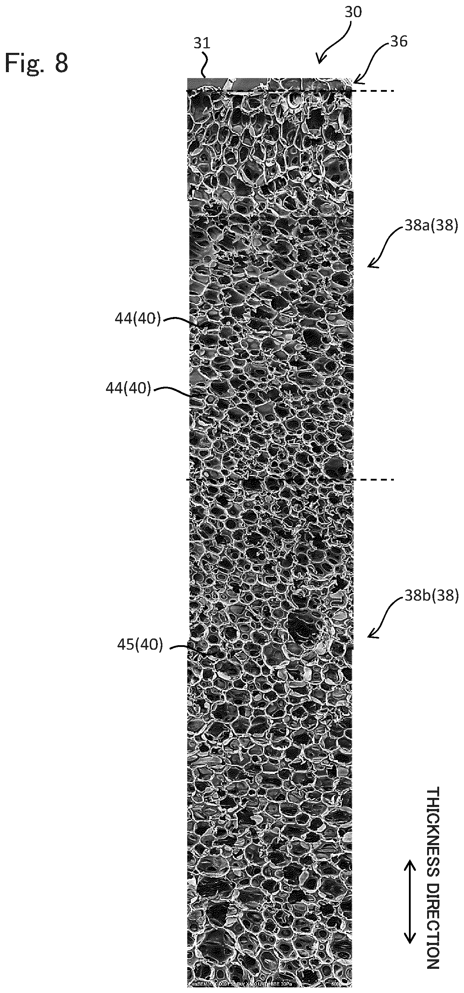

Moreover, as shown in the example of FIGS. 4 and 8, the inner layer 38 includes a first layer 38a. The first layer 38a is located farther from the outer cover 21 in the thickness direction than the skin layer 36. The first layer 38a is laminated on the skin layer 36. A thickness L2 of the first layer 38a in the thickness direction is 5 mm or less.

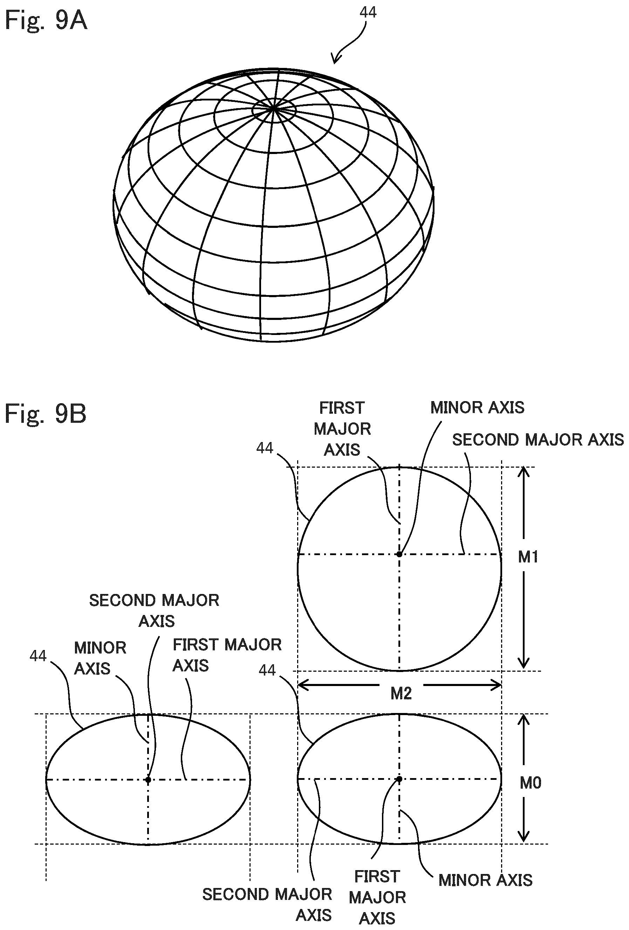

The cells 40 included in the first layer 38a includes flat cells 44 each having a flat ellipsoidal shape. Each flat cell 44 has such a flat ellipsoidal shape that a dimension in the thickness direction is smaller than a dimension in the orthogonal direction. As shown in the example of FIGS. 9A and 9B, the flat cell 44 includes three axes that are a minor axis, a first major axis, and a second major axis. The minor axis, the first major axis, and the second major axis are orthogonal to each other. The flat cell 44 has a rotating body shape formed such that the minor axis is regarded as a rotation axis.

In the flat cell 44, a dimension M0 along the minor axis is shorter than each of a dimension M1 along the first major axis and a dimension M2 along the second major axis. Moreover, in the flat cell 44, the dimension M1 along the first major axis and the dimension M2 along the second major axis are equal to each other or substantially equal to each other. Therefore, a section of the flat cell 44 which is orthogonal to the minor axis has a circular shape or a substantially circular shape. A section of the flat cell 44 which is orthogonal to the first major axis has an oval shape or a substantially oval shape. A section of the flat cell 44 which is orthogonal to the second major axis has an oval shape or a substantially oval shape.

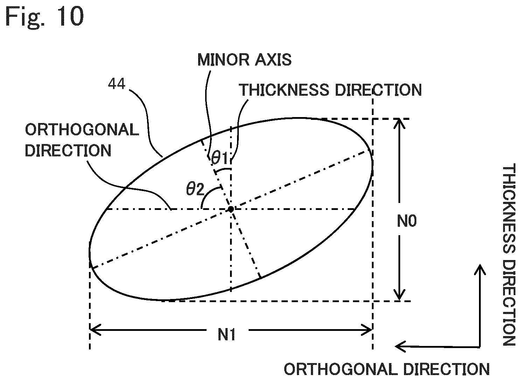

Moreover, as shown in the example of FIG. 10, an angle θ1 between the thickness direction of the core 30 and the minor axis of the flat cell 44 is smaller than an angle θ2 between the orthogonal direction of the core 30 and the minor axis of the flat cell 44. Therefore, the flat cell 44 is located in the first layer 38a of the core 30 such that a dimension N0 of the flat cell 44 in the thickness direction of the core 30 is smaller than a dimension N1 of the flat cell 44 in the orthogonal direction. Therefore, the number of flat cells 44 in the thickness direction increases. Thus, a heat transfer route of the heat-insulating wall 20 in the thickness direction increases, and the heat insulating property of the heat-insulating wall 20 can be improved.

For example, by heating the mold during the production of the core 30, the dimension of the flat cell 44 in the orthogonal direction becomes larger than the dimension of the flat cell 44 in the thickness direction. Thus, the planar dividing wall 34 between the flat cells 44 adjacent to each other in the orthogonal direction breaks, and the communication hole 43 through which the flat cells 44 communicate with each other is easily formed. Therefore, at least one of the number of communication holes 43 or the areas of the communication holes 43 increases by the flat cells 44. Moreover, some or all of the flat cells 44 in the core 30 communicate with the outside of the core 30 through the other cells 40, the through holes 46, the communication holes 43, and the like. Therefore, the air discharging efficiency from the cells 40 of the core 30 to the outside of the core 30 is improved, and the heat insulating property of the heat-insulating wall 20 can be improved.

Moreover, by the flat cells 44, heat conductivity of the heat-insulating wall 20 in the thickness direction is smaller than heat conductivity of the heat-insulating wall 20 in the orthogonal direction. Therefore, in the heat-insulating wall 20, the amount of heat transferred in the thickness direction per unit time and per unit area is smaller than the amount of heat transferred in the orthogonal direction per unit time and per unit area. Thus, the amount of heat transferred from the outside of the heat-insulating container 10 through the heat-insulating wall 20 to the container space 14 can be reduced, and a heat retaining time of the container space 14 can be lengthened.

Furthermore, the heat conductivity of the heat-insulating wall 20 in the orthogonal direction is larger than the heat conductivity of the heat-insulating wall 20 in the thickness direction. Therefore, for example, when the container space 14 of the heat-insulating container 10 is cooled by a cooling agent, the temperature of the cooling agent and the temperature of the heat-insulating wall 20 are uniformized in the orthogonal direction. Thus, a uniform cold reserving effect of a cold reserving material can be lengthened, and the temperature of the container space 14 of the heat-insulating container 10 can be uniformized.

Furthermore, the cells 40 included in the first layer 38a may include spherical cells 45 each having a spherical shape in addition to the flat cells 44 each having the flat ellipsoidal shape. Some or all of the spherical cells 45 in the core 30 communicate with the outside of the core 30 through the other cells 40, the through holes 46, the communication holes 43, and the like.

In the first layer 38a, the flat cell 44 tends to be deformed more than the spherical cell 45 and tends to more largely break than the spherical cell 45. Therefore, an average number of communication holes 43 through which the flat cell 44 communicates with the other cells 40 is larger than an average number of communication holes 43 through which the spherical cell 45 communicates with the other cells 40. The average number of communication holes 43 of the flat cell 44 is a quotient obtained in such a manner that a total number of communication holes 43 through which a predetermined number of flat cells 44, i.e., two or more flat cells 44 communicate with the other cells 40 is divided by the predetermined number of flat cells 44. The average number of communication holes 43 through which the spherical cell 45 communicates with the other cells is a quotient obtained in such a manner that a total number of communication holes 43 through which a predetermined number of spherical cells 45, i.e., two or more spherical cells 45 communicate with the other cells 40 is divided by the predetermined number of spherical cells 45. As above, the communication holes 43 in the core 30 increase by the flat cells 44. Therefore, the air discharging efficiency from the cells 40 of the core 30 to the outside of the core 30 is improved, and the heat insulating property of the heat-insulating wall 20 can be improved.

Moreover, in the first layer 38a, the flat cell 44 tends to be deformed more than the spherical cell 45 and tends to more largely break than the spherical cell 45. Therefore, an average area of the communication hole 43 through which the flat cell 44 communicates with another cell 40 is larger than an average area of the communication hole 43 through which the spherical cell 45 communicates with another cell 40. The average area of the communication hole 43 through which the flat cell 44 communicates with another cell 40 is a quotient obtained in such a manner that a total area of the communication holes 43 through which a predetermined number of flat cells 44, i.e., two or more flat cells 44 communicate with the other cells 40 is divided by the predetermined number of flat cells 44. The average area of the communication hole 43 through which the spherical cell 45 communicates with another cell 40 is a quotient obtained in such a manner that a total area of the communication holes 43 through which a predetermined number of spherical cells 45, i.e., two or more spherical cells 45 communicate with the other cells 40 is divided by the predetermined number of spherical cells 45. As above, the areas of the communication holes 43 in the core 30 increase by the flat cells 44. Therefore, the air discharging efficiency from the cells 40 of the core 30 to the outside of the core 30 is improved, and the heat insulating property of the heat-insulating wall 20 can be improved.

### Second Layer

The inner layer 38 includes a second layer 38b. The second layer 38b is located farther from the skin layer 36 in the thickness direction than the first layer 38a. The second layer 38b is laminated on the first layer 38a. To be specific, the skin layer 36, the first layer 38a, and the second layer 38b are laminated on each other in this order in the thickness direction in the core 30. The cells 40 included in the second layer 38b include the spherical cells 45. The volume of each cell 40 in the second layer 38b is larger than the volume of each cell 40 in the first layer 38a. As above, since each cell 40 in the second layer 38b is large in size and has a spherical shape, the heat-insulating wall 20 can obtain both of the heat insulating property and the strength.

The cells 40 included in the first layer 38a may include the spherical cells 45 in addition to the flat cells 44, and the cells 40 included in the second layer 38b may include the flat cells 44 in addition to the spherical cells 45. In this case, the first layer 38a may be a region of the inner layer 38 where the number of flat cells 44 per unit volume is not less than the number of spherical cells 45 per unit volume, and the second layer 38b may be a region of the inner layer 38 where the number of spherical cells 45 per unit volume is not less than the number of flat cells 44 per unit volume. Moreover, a boundary between the first layer 38a and the second layer 38b in the inner layer 38 does not have to be clear.

### Other Embodiments

### Additional Information

The above embodiment discloses the following technologies.

A first technology is a heat-insulating wall including: a core made of urethane foam including a plurality of cells; and an outer cover including an internal space accommodating the core, the internal space being reduced in pressure, wherein: the core includes a skin layer including a surface that is in contact with the outer cover and an inner layer including the plurality of cells and located farther from the outer cover than the skin layer; and the plurality of cells included in the inner layer includes a first cell that is open on the surface of the skin layer through the skin layer and a second cell that is not open on the surface of the skin layer.

According to this configuration, the cells of the core communicate with the outside of the core through the first cell that is open on the surface. Since air is discharged from the cells of the core through the first cell to the outside, the heat insulating property of the heat-insulating wall can be improved. Moreover, since the skin layer covering the second cell is stretched tight, the strength that suppresses the deformation of the heat-insulating wall can be secured.

A second technology is the heat-insulating wall according to the first technology, wherein the skin layer has a thickness of 20 µm or less. According to this configuration, the skin layer is thin. Therefore, for example, the first cell can penetrate the skin layer and is open on the surface by the stress of the cell without using particles for penetrating the skin layer.

A third technology is the heat-insulating wall according to the first or second technology, wherein: the inner layer included in the core includes a first layer laminated on the skin layer in a thickness direction orthogonal to the surface of the skin layer; and the cells included in the first layer includes a flat cell having such a flat ellipsoidal shape that a dimension in the thickness direction is smaller than a dimension in an orthogonal direction orthogonal to the thickness direction.

According to this configuration, regarding the flat cell having the flat ellipsoidal shape and a spherical cell having a spherical shape which are the same in volume as each other, the flat cells, the number of which is larger than the number of spherical cells, are located in the thickness direction. Therefore, the heat transfer route is lengthened in the thickness direction, and the heat insulating property of the heat-insulating wall can be improved.

A fourth technology is the heat-insulating wall according to the third technology, wherein the first layer has a thickness of 5 mm or less. The flat cell having the ellipsoidal shape in the first layer is lower in compressive strength in a heat-insulating thickness direction than a cell shape of a spherical shape. Therefore, according to this configuration, the strength of the entire heat-insulating wall can be secured.

A fifth technology is the heat-insulating wall according to the third or fourth technology, wherein: the cells included in the first layer include a spherical cell having a spherical shape in addition to the flat cell; and an average area of a communication hole through which the flat cell communicates with another cell is larger than an average area of a communication hole through which the spherical cell communicates with another cell.

According to this configuration, the core includes such flat cell that the average area of the communication hole is large. Therefore, the air discharging efficiency from the cells of the core is improved, and the heat insulating property of the heat-insulating wall can be improved. Moreover, the core includes such spherical cell that the average area of the communication hole is small. Therefore, the strength that suppresses the deformation of the heat-insulating wall can be secured.

A sixth technology is the heat-insulating wall according to any one of the third to fifth technologies, wherein: the cells included in the first layer include a spherical cell having a spherical shape in addition to the flat cell; and an average number of communication holes through which the flat cell communicates with the other cells is larger than an average number of communication holes through which the spherical cell communicates with the other cells. According to this configuration, the core includes such flat cell that the number of communication holes is large. Therefore, the air discharging efficiency from the cells of the core is improved, and the heat insulating property of the heat-insulating wall can be improved.

A seventh technology is the heat-insulating wall according to any one of the third to sixth technologies, wherein: the inner layer included in the core includes a second layer located farther from the skin layer in the thickness direction than the first layer and laminated on the first layer; and the cells included in the second layer include a spherical cell having a spherical shape. According to this configuration, the strength that suppresses the deformation of the heat-insulating wall can be secured by the spherical cell.

An eighth technology is a heat-insulating container including the heat-insulating wall according to any one of the first to seventh technologies. According to this configuration, both of the heat insulating property and strength of the heat-insulating container can be obtained by the heat-insulating wall which has been improved in the heat insulating property and the strength.

A ninth technology is the heat-insulating container according to the eighth technology, wherein: the core includes a plurality of flat surface portions and a corner portion to which the plurality of flat surface portions are connected; and a ratio of the number of second cells to a sum of the number of first cells and the number of second cells in the flat surface portion per unit volume is larger than a ratio of the number of second cells to a sum of the number of first cells and the number of second cells in the corner portion per unit volume.

According to this configuration, the strength that suppresses the deformation of the heat-insulating container is secured at the corner portion by the structure in which the plurality of flat surface portions are connected to each other at the corner portion. The air discharging efficiency can be improved by a large number of first cells, and the heat insulating property can be improved. Moreover, the strength that suppresses the deformation of the heat-insulating container can be secured at the flat surface portion by the skin layer for a large number of second cells.

The above embodiments may be combined with each other as long as they do not exclude each other. From the foregoing explanation, many modifications and other embodiments of the present disclosure are obvious to one skilled in the art. Therefore, the foregoing explanation should be interpreted only as an example and is provided for the purpose of teaching the best mode for carrying out the present disclosure to one skilled in the art. The structures and/or functional details may be substantially modified within the scope of the present disclosure.

### Industrial Applicability

The heat-insulating wall and the heat-insulating container according to the present disclosure are applicable to a heat-insulating wall and a heat-insulating container which can obtain both of the strength and the heat insulating property.

### Reference Signs List

- 10: heat-insulating container
- 20: heat-insulating wall
- 21: outer cover
- 30: core
- 31: surface
- 32: flat surface portion
- 33: corner portion
- 36: skin layer
- 38: inner layer
- 38a: first layer
- 38b: second layer
- 40: cell
- 41: first cell
- 42: second cell
- 43: communication hole
- 44: flat cell
- 45: spherical cell
- 46: through hole

## Claims

1. A heat-insulating wall comprising:
a core made of urethane foam including a plurality of cells; and
an outer cover including an internal space accommodating the core, the internal space being reduced in pressure, wherein:
the core includes
a skin layer including a surface that is in contact with the outer cover and
an inner layer including the plurality of cells and located farther from the outer cover than the skin layer; and
the plurality of cells included in the inner layer includes
a first cell that is open on the surface of the skin layer through the skin layer and
a second cell that is not open on the surface of the skin layer.

2. The heat-insulating wall according to claim 1, wherein the skin layer has a thickness of 20 µm or less.

3. The heat-insulating wall according to claim 1, wherein:
the inner layer included in the core includes a first layer laminated on the skin layer in a thickness direction orthogonal to the surface of the skin layer; and
the cells included in the first layer includes a flat cell having such a flat ellipsoidal shape that a dimension in the thickness direction is smaller than a dimension in an orthogonal direction orthogonal to the thickness direction.

4. The heat-insulating wall according to claim 3, wherein the first layer has a thickness of 5 mm or less.

5. The heat-insulating wall according to claim 3, wherein:
the cells included in the first layer include a spherical cell having a spherical shape in addition to the flat cell; and
an average area of a communication hole through which the flat cell communicates with another cell is larger than an average area of a communication hole through which the spherical cell communicates with another cell.

6. The heat-insulating wall according to claim 3, wherein:
the cells included in the first layer include a spherical cell having a spherical shape in addition to the flat cell; and
an average number of communication holes through which the flat cell communicates with the other cells is larger than an average number of communication holes through which the spherical cell communicates with the other cells.

7. The heat-insulating wall according to claim 3, wherein:
the inner layer included in the core includes a second layer located farther from the skin layer in the thickness direction than the first layer and laminated on the first layer; and
the cells included in the second layer include a spherical cell having a spherical shape.

8. A heat-insulating container comprising the heat-insulating wall according to any one of claims 1 to 7.

9. The heat-insulating container according to claim 8, wherein:
the core includes a plurality of flat surface portions and a corner portion to which the plurality of flat surface portions are connected; and
a ratio of the number of second cells to a sum of the number of first cells and the number of second cells in the flat surface portion per unit volume is larger than a ratio of the number of second cells to a sum of the number of first cells and the number of second cells in the corner portion per unit volume.
